# EUROPEAN PATENT APPLICATION

(11) **EP 4 668 357 A1**
(43) Date of publication of application: **24.12.2025**
(21) Application number: 24884838.4
(22) Date of filing: 30.10.2024
(51) Int. Cl.: H01M 4/36, H01M 4/525, H01M 4/505, H01M 10/0525

(54) **NICKEL-COBALT-MANGANESE TERNARY PRECURSOR, PREPARATION METHOD THEREFOR AND USE THEREOF**

(30) Priority: 31.10.2023 CN 202311445230
(71) Applicant: HUAYOU NEW ENERGY TECHNOLOGY (QUZHOU) CO., LTD., Quzhou, Zhejiang 324000 (CN); ZHEJIANG HUAYOU COBALT CO., LTD., Jiaxing, Zhejiang 314000 (CN)
(72) Inventor: ZHAO, Zihan, Quzhou, Zhejiang 324000 (CN); CAI, Zengfu, Quzhou, Zhejiang 324000 (CN); QIU, Tian, Quzhou, Zhejiang 324000 (CN); ZHOU, Wenjie, Quzhou, Zhejiang 324000 (CN); XIA, Jili, Quzhou, Zhejiang 324000 (CN); WU, Guojun, Quzhou, Zhejiang 324000 (CN); LIU, Meihong, Quzhou, Zhejiang 324000 (CN)
(74) Representative: Delbarba, Andrea
(86) International application number: PCT/CN2024/128583
(87) International publication number: WO 2025/092838

(57) **Abstract**

The present application relates to a nickel-cobalt-manganese ternary precursor, a preparation method therefor, and use thereof. The nickel-cobalt-manganese ternary precursor comprises a core and a coating layer formed by stacking a plurality of primary particles on the surface of the core. The porosity of the core is greater than the porosity of the coating layer. The particle diameter of the core is less than or equal to 1 µm. The ratio of the radius of the core to the thickness of the coating layer is less than or equal to 1:2.75. The nickel-cobalt-manganese ternary precursor of the present application not only has an ultra-low specific surface area of 5 m²/g or less, but also has excellent dispersability and uniformity. When the nickel-cobalt-manganese ternary precursor is used for preparing a cathode material, the specific surface area of the cathode material can be reduced, thereby improving the cycle performance of a battery.

## Description

The present application claims the right of priority on the basis of Chinese Patent Application No. 2023114452304, filed on 31 October 2023, the entirety of which is incorporated herein by reference.

### Technical Field

The present application relates to the technical field of lithium ion batteries, and in particular, to a nickel-cobalt-manganese ternary precursor, a preparation method therefor, and use thereof.

### Background

In response to the energy crisis facing the world today, new energy vehicles have gradually attracted people's attention. As the best electric energy storage medium at present, lithium-ion batteries have been widely used and studied in the fields of portable batteries and power batteries. However, the market has put forward higher requirements for power lithium-ion batteries. A high energy density, high safety, a long cycle life, good thermal stability, and low costs have become the key performance indicators for evaluating power batteries, especially energy density and safety issues. On this basis, high-nickel cathode materials having layered structures have become the first choice for future lithium-ion batteries.

In order to further improve the endurance mileage of new energy electric vehicles, improving the volume energy density of lithium-ion batteries has become a key factor. The specific capacity of lithium-ion batteries can be increased by increasing the charge and discharge voltage or further increasing the Ni content, but the average particle diameter of traditional high-nickel ternary precursors is usually greater than 8 µm. This is because small-particle precursors of 3 µm-8 µm generally have a specific surface area higher than 6 m²/g, which will make the prepared high-nickel single crystal cathode material prone to generate secondary micro-cracks during long cycles, thus leading to structural collapse, and then causing deterioration of electrochemical properties. Therefore, in order to match the electrochemical properties requirements of high-nickel single crystal cathode materials, it is urgent to develop a small-particle ternary precursor having an ultra-low specific surface area.

### Summary

On this basis, it is necessary to provide a nickel-cobalt-manganese ternary precursor, a preparation method therefor, and use thereof, aiming at the described problems. The nickel-cobalt-manganese ternary precursor not only has an ultra-low specific surface area of not more than 5 m²/g, but also has excellent dispersibility and uniformity. When the nickel-cobalt-manganese ternary precursor is used for preparing a cathode material, the specific surface area of the cathode material can be reduced, thereby improving the cycle performance of a battery.

A nickel-cobalt-manganese ternary precursor, comprising a core and a coating layer formed by stacking a plurality of primary particles on the surface of the core, wherein the porosity of the core is greater than the porosity of the coating layer, the particle diameter of the core is less than or equal to 1 µm, and the ratio of the radius of the core to the thickness of the coating layer is less than or equal to 1:2.75.

In one of the examples, the nickel-cobalt-manganese ternary precursor satisfies at least one of the following conditions:
(1) the volume of the core accounts for 0.5%-4.0% of the volume of the nickel-cobalt-manganese ternary precursor;
(2) the particle diameter of the nickel-cobalt-manganese ternary precursor is less than or equal to 8 µm;
(3) the porosity of the coating layer is less than or equal to 1.5%;
(4) the porosity of the core is 1%-5%; and
(5) the nickel-cobalt-manganese ternary precursor has a K₉₀ of 0.50-0.55.

In one of the examples, the nickel-cobalt-manganese ternary precursor has a particle diameter of 3 µm-8 µm.

In one of the examples, the primary particles are obtained by stacking a plurality of sheet-like structures, and the primary particles have a thickness of 300 nm-500 nm in the stacking direction of the sheet-like structures.

In one of the examples, the nickel-cobalt-manganese ternary precursor has a general molecular formula of NiₓCo_{y}Mn_{z}(OH)₂, wherein x+y+z=1, 0.8≤x≤0.9, 0<y≤0.2, and 0<z≤0.2.

A preparation method for the nickel-cobalt-manganese ternary precursor as described above, comprising the following steps:
mixing a soluble nickel salt, a soluble cobalt salt, and a soluble manganese salt to obtain a mixed metal salt solution, and mixing a first ammonia water, a first alkali solution, and water to obtain a base solution;
continuously adding the mixed metal salt solution, a second ammonia water, and a second alkali solution to the base solution for a coprecipitation reaction, and when the D₅₀ particle diameter of the product reaches a target size, completing the reaction, so as to obtain a nickel-cobalt-manganese ternary precursor;
wherein the coprecipitation reaction comprises a first reaction stage, a second reaction stage, and a third reaction stage, and satisfies the following conditions:
   (1) the pH value of the second reaction stage is less than the pH value of the first reaction stage, and the pH value of the third reaction stage is less than the pH value of the first reaction stage; and
   (2) the stirring speed is decreased gradiently with the increase of the particle diameter of the product from the third reaction stage.

In one of the examples, the coprecipitation reaction satisfies at least one of the following conditions:
(1) the pH value of the third reaction stage is less than or equal to the pH value of the second reaction stage;
(2) the stirring speed of the first reaction stage is greater than or equal to the stirring speed of the second reaction stage;
(3) the flow rate of the mixed metal salt solution is increased from the second reaction stage, and the flow rate of the mixed metal salt solution in the first reaction stage is less than the flow rate of the mixed metal salt solution in the third reaction stage;
(4) the ammonia value in the first reaction stage is greater than or equal to the ammonia value in the second reaction stage, and the ammonia value in the second reaction stage is greater than or equal to the ammonia value in the third reaction stage; and
(5) the first reaction stage, the second reaction stage, and the third reaction stage are all performed under alkaline conditions.

In one of the examples, the coprecipitation reaction satisfies at least one of the following conditions:
(1) the difference value between the pH value of the first reaction stage and the pH value of the second reaction stage is 0.3-0.5, and the pH value of the third reaction stage is equal to the pH value of the second reaction stage;
(2) in the third reaction stage, the stirring speed is reduced by 20 rpm-30 rpm for every 0.5 µm-1 µm increase in the particle diameter of the product, and the stirring speed in the first reaction stage is equal to the stirring speed in the second reaction stage;
(3) the difference value between the flow rate of the mixed metal salt solution in the second reaction stage and the flow rate of the mixed metal salt solution in the first reaction stage is less than or equal to 15 L/h, the increase rate is less than or equal to 1.3 L/h, and the flow rate of the mixed metal salt solution in the third reaction stage is equal to the flow rate of the mixed metal salt solution at the end of the second reaction stage; and
(4) the ammonia value of the second reaction stage is equal to the ammonia value of the third reaction stage.

In one of the examples, the coprecipitation reaction also satisfies at least one of the following conditions:
(1) in the first reaction stage, the pH value is 11.3-12.6, the ammonia value is 2.0 g/L-10.0 g/L, the stirring speed is 330 rpm-600 rpm, and the flow rate of the mixed metal salt solution is 2 L/h-30 L/h;
(2) in the second reaction stage, the pH value is 11.1-12.2, the ammonia value is 2.0 g/L-10.0 g/L, the stirring speed is 330 rpm-600 rpm, and the flow rate of the mixed metal salt solution is 2 L/h-40 L/h; and
(3) in the third reaction stage, the pH value is 11.1-12.2, the ammonia value is 2.0 g/L-10.0 g/L, the stirring speed is 100 rpm-550 rpm, and the flow rate of the mixed metal salt solution is 15 L/h-40 L/h.

In one of the examples, the time of the first reaction stage accounts for 0.5%-1.5% of the total time of the coprecipitation reaction, and the time of the second reaction stage accounts for 16%-25% of the total time of the coprecipitation reaction.

In one of the examples, the coprecipitation reaction also satisfies at least one of the following conditions:
(1) the flow rate of nitrogen gas introduced into the liquid in the reaction solution is 100 L/h-800 L/h;
(2) the flow rate of air introduced into the liquid in the reaction solution is less than or equal to 300 L/h;
(3) the reaction temperature is 40 °C-75 °C;
(4) the concentration of the second ammonia water is 1.0 mol/L-12.0 mol/L;
(5) the concentration of the second alkali solution is 1.0 mol/L-13.0 mol/L; and
(6) the second alkali solution is a sodium hydroxide solution.

In one of the examples, the mixed metal salt solution satisfies at least one of the following conditions:
(1) the total concentration of mixed metal salts in the mixed metal salt solution is 1.2 mol/L-2.7 mol/L; and
(2) based on the total molar percentage of metal ions in the mixed metal salt solution being defined as 100%, in the mixed metal salt solution, the molar percentage of nickel ions is 80%-90%, the molar percentage of cobalt ions is less than or equal to 20%, and the molar percentage of manganese ions is less than or equal to 20%.

In one of the examples, the base solution satisfies at least one of the following conditions:
(1) the ammonia value is 2 g/L-10 g/L;
(2) the pH value is 11.3-12.6;
(3) the amount of water used is 100 L-300 L;
(4) the concentration of the first ammonia water is 1.0 mol/L-12.0 mol/L;
(5) the concentration of the first alkali solution is 1.0 mol/L-13.0 mol/L; and
(6) the first alkali solution is a sodium hydroxide solution.

A cathode material made from the nickel-cobalt-manganese ternary precursor as described above.

A lithium ion battery, comprising the described cathode material.

The nickel-cobalt-manganese ternary precursor described in the present application has a relatively small core particle diameter, which satisfies the specific ratio of the radius of the core to the thickness of the coating layer, and the porosity of the coating layer is less than the porosity of the core, and therefore a structure that is loose inside and dense outside is formed, thereby achieving the goal of making the nickel-cobalt-manganese ternary precursor have excellent dispersibility and uniformity, while reducing the specific surface area to less than 5 m²/g. Therefore, the nickel-cobalt-manganese ternary precursor described in the present application solves the problems of high specific surface area and easy agglomeration of small particle ternary precursors. When it is used to prepare a cathode material, it can not only significantly reduce the amount of residual lithium on the surface of the cathode material, effectively reduce the specific surface area of the cathode material, and reduce a side reaction with the electrolyte during the charging and discharging process of the positive electrode, but also improve the lithium-nickel mixed arrangement phenomenon during a sintering process, reduce the generation of pseudo-single crystal, and make the cathode material have excellent electrochemical properties such as high energy density and high cycle life, etc.

In addition, the present application coordinately regulates the pH value and stirring speed of the reaction solution during the reaction process in different time periods. On the one hand, the reaction particles grow slowly, so that the volume ratio of the core of the precursor is relatively low, and the coating layer has a relatively high thickness and is dense, forming a structure which is loose inside and dense outside; on the other hand, the reaction particles are highly dispersed, so that as the synthesis time increases, the primary particles grow radially, which is beneficial to maintaining the uniformity of the precursor. In addition, during the synthesis process, the stirring speed is gradiently reduced according to the particle diameter, which can also avoid the phenomenon of particle breakage caused by stirring, thereby improving the quality of the obtained precursor.

### Brief Description of the Drawings

Fig. 1 is a scanning electron microscope image at different magnifications of the nickel-cobalt-manganese ternary precursor prepared in Example 1;
Fig. 2 is a scanning electron microscope image at different magnifications of the nickel-cobalt-manganese ternary precursor prepared in Example 2;
Fig. 3 is a scanning electron microscope image at different magnifications of the nickel-cobalt-manganese ternary precursor prepared in Example 3;
Fig. 4 is a scanning electron microscope image at different magnifications of the nickel-cobalt-manganese ternary precursor prepared in Comparative Example 1;
Fig. 5 is a scanning electron microscope image at different magnifications of the nickel-cobalt-manganese ternary precursor prepared in Comparative Example 2; and
Fig. 6 is a scanning electron microscope image at different magnifications of the nickel-cobalt-manganese ternary precursor prepared in Comparative Example 3.

### Detailed Description of the Embodiments

In order to facilitate understanding of the present application, the present application will be described in more detail below. However, it should be understood that the present application may be implemented in many different forms, and is not limited to the embodiments or examples described herein. Rather, these embodiments or examples are provided for a more thorough understanding of the disclosure of the present application.

Unless defined otherwise, all technical and scientific terms used herein have the same meaning as commonly understood by one of ordinary skill in the art to which this application belongs. The terms used in the specification of the present application is for the purpose of describing particular embodiments or examples only and is not intended to limit the present application.

The present application provides a nickel-cobalt-manganese ternary precursor, comprising a core and a coating layer formed by stacking a plurality of primary particles on the surface of the core, wherein the porosity of the core is greater than the porosity of the coating layer, the particle diameter of the core is less than or equal to 1 µm, and the ratio of the radius of the core to the thickness of the coating layer is less than or equal to 1:2.75.

As to traditional nickel-cobalt-manganese ternary precursors, the specific surface area cannot be reduced to 5 m²/g or less, resulting in strong surface activity, and particles are extremely prone to agglomeration to form large particles. However, the nickel-cobalt-manganese ternary precursor of the present application has a relatively small core particle diameter and satisfies a specific ratio of the core radius to the thickness of the coating layer, and the porosity of the coating layer is lower than that of the core, and therefore a structure which is loose inside and dense outside is formed, thereby achieving excellent dispersibility and uniformity of the nickel-cobalt-manganese ternary precursor while reducing the specific surface area to 5 m²/g or less.

Preferably, the nickel-cobalt-manganese ternary precursor satisfies at least one of the following conditions:
(1) the volume of the core accounts for 0.5%-4.0% of the volume of the nickel-cobalt-manganese ternary precursor;
(2) the particle diameter of the nickel-cobalt-manganese ternary precursor is less than or equal to 8 µm;
(3) the porosity of the coating layer is less than or equal to 1.5%;
(4) the porosity of the core is 1%-5%; and
(5) the nickel-cobalt-manganese ternary precursor has a K₉₀ of 0.50-0.55.

Controlling the volume ratio of the core within the described range helps to improve the uniformity of the nickel-cobalt-manganese ternary precursor; controlling the particle diameter of the nickel-cobalt-manganese ternary precursor within the described range helps to improve the processability thereof, so as to prepare a high-nickel cathode material having good performance; controlling the porosity of the coating layer and the core in the described range helps to reduce the specific surface area of the nickel-cobalt-manganese ternary precursor and improve the cycle performance of the cathode material prepared from the nickel-cobalt-manganese ternary precursor; and controlling the K₉₀ of the nickel-cobalt-manganese ternary precursor within the described range can improve the uniformity of the particle diameter distribution.

Further preferably, the nickel-cobalt-manganese ternary precursor has a particle diameter of 3 µm-8 µm, and more preferably 3 µm-5 µm; the ratio of the radius of the core to the thickness of the coating layer is 1:9.75-1:2.75, and the specific surface area of the nickel-cobalt-manganese ternary precursor can be further reduced by the described limitation.

Preferably, the primary particles are obtained by stacking a plurality of sheet-like structures, and the thickness of the primary particles in the stacking direction of the sheet-like structures is 300 nm-500 nm, which is more beneficial for improving the dispersibility and uniformity of the precursor.

It should be noted that the thickness of the primary particles in the stacking direction of the sheet-like structures is 300 nm-500 nm, which is an overall expression of the structure of the coating layer, and it can be understood that the thickness of the primary particles in the stacking direction of the sheet-like structures is mainly 300 nm-500 nm, and the coating layer further comprises a small number of thinner primary particles or thicker primary particles. Specifically, in an electron micrograph of a product, at least 40% or more of the primary particles have a thickness of 300 nm-500 nm.

In one embodiment, the nickel-cobalt-manganese ternary precursor has a general molecular formula of NiₓCo_{y}Mn_{z}(OH)₂, wherein x+y+z=1, and 0.8≤x≤0.9, 0<y≤0.2, and 0<z≤0.2. By increasing the nickel content of the nickel-cobalt-manganese ternary precursor having an ultra-low specific surface area, the specific capacity and cycle performance of the obtained cathode material can be improved at the same time.

Provided is a preparation method for a nickel-cobalt-manganese ternary precursor, comprising the following steps:
S1, mixing a soluble nickel salt, a soluble cobalt salt, and a soluble manganese salt to obtain a mixed metal salt solution, and mixing a first ammonia water, a first alkali solution, and water to obtain a base solution;
S2, continuously adding the mixed metal salt solution, a second ammonia water, and a second alkali solution to the base solution for a coprecipitation reaction, and when the D50 particle diameter of the product reaches a target size, completing the reaction, so as to obtain a nickel-cobalt-manganese ternary precursor;
wherein the coprecipitation reaction in step S2 comprises a first reaction stage, a second reaction stage, and a third reaction stage, and satisfies the following conditions:
   (1) the pH value of the second reaction stage is less than the pH value of the first reaction stage, and the pH value of the third reaction stage is less than the pH value of the first reaction stage; and
   (2) the stirring speed is decreased gradiently with the increase of the particle diameter of the product from the third reaction stage.

The present application coordinately regulates the pH value and stirring speed of the reaction solution during the reaction process in different time periods. On the one hand, the reaction particles grow slowly, so that the volume ratio of the core of the precursor is relatively low, and the coating layer has a relatively high thickness and is dense, forming a structure which is loose inside and dense outside; on the other hand, the reaction particles are highly dispersed, so that as the synthesis time increases, the primary particles grow radially, which is beneficial to maintaining the uniformity of the precursor. In addition, during the synthesis process, the stirring speed is gradiently reduced according to the particle diameter, which can also avoid the phenomenon of particle breakage caused by stirring, thereby improving the quality of the obtained precursor.

In one embodiment, the coprecipitation reaction satisfies at least one of the following conditions:
(1) the pH value of the third reaction stage is less than or equal to the pH value of the second reaction stage;
(2) the stirring speed of the first reaction stage is greater than or equal to the stirring speed of the second reaction stage;
(3) the flow rate of the mixed metal salt solution is increased from the second reaction stage, and the flow rate of the mixed metal salt solution in the first reaction stage is less than the flow rate of the mixed metal salt solution in the third reaction stage;
(4) the ammonia value in the first reaction stage is greater than or equal to the ammonia value in the second reaction stage, and the ammonia value in the second reaction stage is greater than or equal to the ammonia value in the third reaction stage; and
(5) the first reaction stage, the second reaction stage, and the third reaction stage are all performed under alkaline conditions.

In one embodiment, the coprecipitation reaction satisfies at least one of the following conditions:
(1) the difference value between the pH value of the first reaction stage and the pH value of the second reaction stage is 0.3-0.5, and the pH value of the third reaction stage is equal to the pH value of the second reaction stage;
(2) in the third reaction stage, the stirring speed is reduced by 20 rpm-30 rpm for every 0.5 µm-1 µm increase in the particle diameter of the product, and the stirring speed in the first reaction stage is equal to the stirring speed in the second reaction stage;
(3) the difference value between the flow rate of the mixed metal salt solution in the second reaction stage and the flow rate of the mixed metal salt solution in the first reaction stage is less than or equal to 15 L/h, the increase rate is less than or equal to 1.3 L/h, and the flow rate of the mixed metal salt solution in the third reaction stage is equal to the flow rate of the mixed metal salt solution at the end of the second reaction stage; and
(4) the ammonia value of the second reaction stage is equal to the ammonia value of the third reaction stage.

Based on the selective time-phased regulation of pH value and stirring speed, the present application specifies the pH value difference, stirring speed difference, and flow rate difference and increase rate of the mixed metal salt solution among the first reaction stage, the second reaction stage, and the third reaction stage, thereby reducing the specific surface area while further improving the dispersibility of the precursor.

It should be noted that the present application does not limit the time point for increasing the flow rate of the mixed metal salt solution in the second reaction stage, that is, the flow rate of the mixed metal salt solution can be increased at any time point during the reaction process of the second reaction stage.

In one embodiment, the coprecipitation reaction also satisfies at least one of the following conditions:
(1) in the first reaction stage, the pH value is 11.3-12.6, and preferably 11.5-12.4, the ammonia value is 2.0 g/L-10.0 g/L, and preferably 4.0 g/L-9.0 g/L, the stirring speed is 330 rpm-600 rpm, and preferably 360 rpm-550 rpm, and the flow rate of the mixed metal salt solution is 2 L/h-30 L/h, and preferably 5 L/h-25 L/h;
(2) in the second reaction stage, the pH value is 11.1-12.2, and preferably 11.3-12.0, the ammonia value is 2.0 g/L-10.0 g/L, and preferably 4.0 g/L-9.0 g/L, the stirring speed is 330 rpm-600 rpm, and preferably 360 rpm-550 rpm, and the flow rate of the mixed metal salt solution is 2 L/h-40 L/h, and preferably 5 L/h-25 L/h; and
(3) in the third reaction stage, the pH value is 11.1-12.2, and preferably 11.3-12.0, the ammonia value is 2.0 g/L-10.0 g/L, and preferably 4.0 g/L-9.0 g/L, the stirring speed is 100 rpm-550 rpm, and preferably 200 rpm-520 rpm, and the flow rate of the mixed metal salt solution is 15 L/h-40 L/h, and preferably 15 L/h-35 L/h.

By selecting the range of pH value, ammonia value, stirring speed, and flow rate of mixed metal salt solution, it is not only beneficial to reduce the agglomeration of the core and thus reduce the particle diameter of the precursor, but also the coating layer structure can be made denser, which is beneficial to forming a structure that is loose inside and dense outside, while improving the dispersibility, which is beneficial to further reducing the specific surface area of the precursor.

Preferably, the time of the first reaction stage accounts for 0.5%-1.5%, and more preferably 0.6%-1.0% of the total time of the coprecipitation reaction, and the time of the second reaction stage accounts for 16%-25%, and more preferably 17%-23% of the total time of the coprecipitation reaction, and the specific surface area of the precursor is further reduced by controlling the reaction time of each reaction stage.

The traditional nickel-cobalt-manganese ternary precursor has a relatively large specific surface area, resulting in a relatively strong surface activity, and particles are extremely prone to agglomerate to form large particles. However, in the present application, the size and dispersibility of the reaction particles are strictly controlled by regulating the pH value and the stirring speed in the reaction stage. Therefore, a nickel-cobalt-manganese ternary precursor having an ultra-low specific surface area and a target size of small particles can be prepared by the preparation method of the present application.

During the coprecipitation reaction, the temperature is controlled at 40°C-75°C, and more preferably 50°C-65°C, so that a nickel-cobalt-manganese ternary precursor having a small particle diameter can be better obtained.

In one embodiment, nitrogen gas is introduced into the coprecipitation reaction solution at a flow rate of 100 L/h to 800 L/h, and preferably 150 L/h to 700 L/h, and/or air is introduced at a flow rate of less than or equal to 300 L/h, and preferably less than or equal to 100 L/h, which is beneficial to controlling the porosity of the particles and maintaining the dispersibility of the particles and the thickness of primary particles on the surface.

In one embodiment, the mixed metal salt solution in step S1 satisfies at least one of the following conditions:
(1) the total concentration of mixed metal salts in the mixed metal salt solution is 1.2 mol/L-2.7 mol/L; and
(2) based on the total molar percentage of metal ions in the mixed metal salt solution being defined as 100%, in the mixed metal salt solution, the molar percentage of nickel ions is 80%-90%, the molar percentage of cobalt ions is less than or equal to 20%, and the molar percentage of manganese ions is less than or equal to 20%.

In one embodiment, the base solution in step S1 satisfies at least one of the following conditions:
(1) the ammonia value is 2 g/L-10 g/L, and more preferably 4.0 g/L-9.0 g/L;
(2) the pH value is 11.3-12.6, and more preferably 11.5-12.4;
(3) the amount of water used is 100 L-300 L, and more preferably 150 L-270 L;
(4) the concentration of the first ammonia water is 1.0 mol/L-12.0 mol/L;
(5) the concentration of the first alkali solution is 1.0 mol/L-13.0 mol/L; and
(6) the first alkali solution is a sodium hydroxide solution.

In one embodiment, the concentration of the second ammonia water is 1.0 mol/L-12.0 mol/L, and the concentration of the second alkali solution is 1.0 mol/L-13.0 mol/L; and the second alkali solution is a sodium hydroxide solution.

It should be noted that, the concentration of the second ammonia water and the concentration of the first ammonia water may be the same or different, and the concentration of the second alkali solution and the concentration of the first alkali solution may be the same or different, and the present application does not make limitations.

The first alkali solution and/or the second alkali solution comprise, but is not limited to, a sodium hydroxide solution, and is preferably a sodium hydroxide solution.

In one embodiment, the coprecipitation reaction further comprises steps such as aging, separation, washing, drying, sieving, and demagnetizing.

The present application provides a cathode material made from the nickel-cobalt-manganese ternary precursor as described above.

When the nickel-cobalt-manganese ternary precursor of the present application is used to prepare a cathode material, it can not only significantly reduce the amount of residual lithium on the surface of the cathode material, effectively reduce the specific surface area of the cathode material, and reduce a side reaction with the electrolyte during the charging and discharging process of the positive electrode, but also improve the lithium-nickel mixed arrangement phenomenon during a sintering process, reduce the generation of pseudo-single crystal, and make the cathode material have excellent electrochemical properties such as high energy density and high cycle life, etc.

It should be noted that, for the preparation method for the cathode material, reference is made to existing methods, and details are not described herein again.

The present application further provides a lithium ion battery, comprising the cathode material described above.

Specifically, the lithium ion battery comprises a positive electrode sheet, a negative electrode sheet, a separator, and an electrolyte, wherein the positive electrode sheet comprises a positive electrode current collector and a cathode material layer disposed on a surface of the positive electrode current collector, and the cathode material layer comprises the cathode material as described above.

In an embodiment, the cathode material layer further comprises a conductive agent and a binding agent.

Hereinafter, the nickel-cobalt-manganese ternary precursor, the preparation method therefor, and use thereof will be further described through the following specific examples.

### Example 1

A sodium hydroxide solution having a concentration of 10.5 mol/L was prepared as a precipitant, which was recorded as solution A; an ammonia solution having a concentration of 5 mol/L was prepared as a complexing agent, which was recorded as solution B; and soluble nickel, cobalt, and manganese salts (molar ratio of 88:6:6) were mixed with deionized water to prepare a mixed metal salt solution having a concentration of 2.3 mol/L, which was recorded as solution C. The solution A, solution B, and solution C were maintained at a constant temperature of 25°C.

A 500 L titanium reaction kettle having a controllable temperature and a controllable rotating speed was used, 250 L of hot pure water was firstly added, the temperature of the reaction kettle was controlled to be 65°C, the stirring speed was controlled to be 360 rpm, then the solution A and the solution B were pumped into the reaction kettle, the ammonia value was maintained at 7.5 g/L before adding an alkali, and the initial pH value was 12.30, so as to prepare a reaction kettle starting base solution. After the start of the reaction, the flow rates of the solution A, solution B, and solution C were respectively set to 7 L/h, 2.5 L/h, and 15 L/h, and the mixture was continuously pumped to a constant-temperature reaction kettle at 65°C through a material feeding tank for a reaction. At a stirring speed of 360 rpm, the flow rate of the solution A was adjusted so that the pH value of the synthesis system was stable at 12.30, the flow rate of the solution B was adjusted so that the ammonia value of the synthesis system was maintained at 5.0 g/L, the flow rate of nitrogen gas under the liquid of the atmosphere of the reaction kettle was adjusted to 500 L/h, and the maintaining time was 60 min, so as to complete the first reaction stage.

At a stirring speed of 360 rpm, the flow rate of the solution A was reduced, the pH value was slowly adjusted to 11.80 and then the flow rate was recovered, and at the same time, the flow rate of the solution B was synchronously adjusted so as to maintain the ammonia value of the synthesis system at 5.0 g/L, and the nitrogen gas flow rate under the liquid of the atmosphere of the reaction kettle was adjusted to be 500 L/h for a duration of 33 h, wherein the flow rate of the solution C was adjusted after completing the first reaction stage for 15 h, and was quickly increased to 25 L/h within 12 h, the flow rates of the solution A and solution B were synchronously adjusted to stabilize the pH value at 11.80, and the ammonia value was maintained at 5.0 g/L; the stirring speed was reduced gradiently according to D₅₀, when D₅₀ reached 2.50 µm, the stirring speed was reduced and maintained at 340 rpm, when D₅₀ reached 3.20 µm, the stirring speed was reduced and maintained at 320 rpm, and when D₅₀ reached 3.60 µm, the reaction was stopped, so as to obtain a nickel-cobalt-manganese ternary precursor slurry.

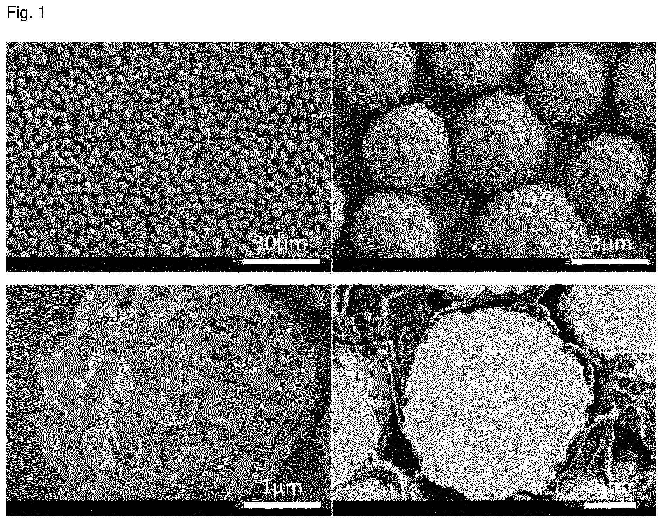

The precursor slurry satisfying particle diameter requirements was placed in a transfer tank and stirred, and washed with an alkali solution and pure water, alternately, and then the material was uniformly distributed in a drying device for drying, wherein the drying temperature was 90°C and the drying time was 8 h; and then a nickel-cobalt-manganese ternary precursor product was obtained by sieving, removing iron, and packaging, wherein the screen was a 325-mesh double layer screen. The morphology of the prepared nickel-cobalt-manganese ternary precursor was observed. As shown in Fig. 1, it can be determined that the precursor particles were uniform and had good dispersibility, the particle diameter of the core was relatively small, and the primary particle layer had a relatively high thickness and was dense.

### Example 2

A sodium hydroxide solution having a concentration of 10.5 mol/L was prepared as a precipitant, which was recorded as solution A; an ammonia solution having a concentration of 5 mol/L was prepared as a complexing agent, which was recorded as solution B; and soluble nickel, cobalt, and manganese salts (molar ratio of 89:4:7) were mixed with deionized water to prepare a mixed metal salt solution having a concentration of 2.3 mol/L, which was recorded as solution C. The solution A, solution B, and solution C were maintained at a constant temperature of 25°C.

A 500 L titanium reaction kettle having a controllable temperature and a controllable rotating speed was used, 250 L of hot pure water was firstly added, the temperature of the reaction kettle was controlled to be 65°C, the stirring speed was controlled to be 400 rpm, then the solution A and the solution B were pumped into the reaction kettle, the ammonia value was maintained at 5.5 g/L before adding an alkali, and the initial pH value was 12.50, so as to prepare a reaction kettle starting base solution. After the start of the reaction, the flow rates of the solution A, solution B, and solution C were respectively set to 8 L/h, 2.5 L/h, and 15 L/h, and the mixture was continuously pumped to a constant-temperature reaction kettle at 65°C through a material feeding tank for a reaction. At a stirring speed of 360 rpm, the flow rate of the solution A was adjusted so that the pH value of the synthesis system was stable at 12.5, the flow rate of the solution B was adjusted so that the ammonia value of the synthesis system was maintained at 7.0 g/L, the flow rate of nitrogen gas under the liquid of the atmosphere of the reaction kettle was adjusted to 400 L/h, and the maintaining time was 45 min, so as to complete the first reaction stage.

At a stirring speed of 400 rpm, the flow rate of the solution A was reduced, the pH value was slowly adjusted to 11.90 and then the flow rate was recovered, and at the same time, the flow rate of the solution B was synchronously adjusted so as to maintain the ammonia value of the synthesis system at 7.0 g/L, and the nitrogen gas flow rate under the liquid of the atmosphere of the reaction kettle was adjusted to be 400 L/h for a duration of 30 h, wherein the flow rate of the solution C was adjusted after completing the first reaction stage for 15 h, and was quickly increased to 30 L/h within 12 h, the flow rates of the solution A and solution B were synchronously adjusted to stabilize the pH value at 11.90, and the ammonia value was maintained at 7.0 g/L; the stirring speed was reduced gradiently according to D₅₀, when D₅₀ reached 2.50 µm, the stirring speed was reduced and maintained at 370 rpm, when D₅₀ reached 3.50 µm, the stirring speed was reduced and maintained at 310 rpm, and when D₅₀ reached 3.90 µm, the reaction was stopped, so as to obtain a nickel-cobalt-manganese ternary precursor slurry.

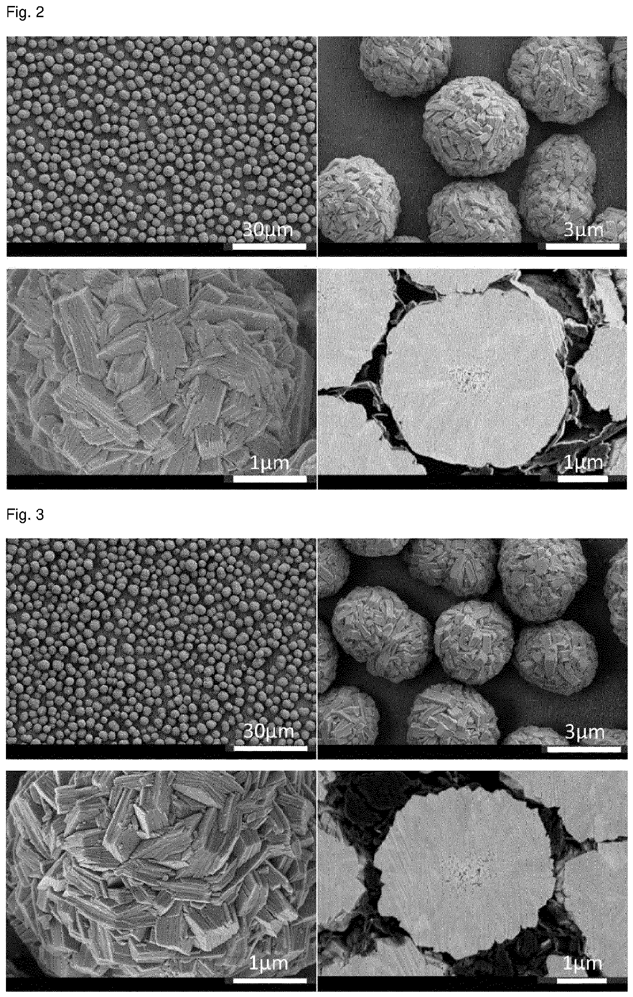

The precursor slurry satisfying particle diameter requirements was placed in a transfer tank and stirred, and washed with an alkali solution and pure water, alternately, and then the material was uniformly distributed in a drying device for drying, wherein the drying temperature was 90°C and the drying time was 8 h; and then a nickel-cobalt-manganese ternary precursor product was obtained by sieving, removing iron, and packaging, wherein the screen was a 325-mesh double layer screen. The morphology of the prepared nickel-cobalt-manganese ternary precursor was observed. As shown in Fig. 2, it can be determined that the precursor particles were uniform and had good dispersibility, the particle diameter of the core was relatively small, and the primary particle layer had a relatively high thickness and was dense.

### Example 3

Solution A, solution B, and solution C were prepared in the same manner as in Example 2.

A 500 L titanium reaction kettle having a controllable temperature and a controllable rotating speed was used, 250 L of hot pure water was firstly added, the temperature of the reaction kettle was controlled to be 60°C, the stirring speed was controlled to be 360 rpm, then the solution A and the solution B were pumped into the reaction kettle, the ammonia value was maintained at 5.5 g/L before adding an alkali, and the initial pH value was 12.35, so as to prepare a reaction kettle starting base solution. After the start of the reaction, the flow rates of the solution A, solution B, and solution C were respectively set to 8 L/h, 2.5 L/h, and 15 L/h, and the mixture was continuously pumped to a constant-temperature reaction kettle at 60°C through a material feeding tank for a reaction. The subsequent steps were the same as those in Example 2. The morphology of the prepared nickel-cobalt-manganese ternary precursor was observed. As shown in Fig. 3, it can be determined that the precursor particles were uniform and had good dispersibility, the particle diameter of the core was relatively small, and the primary particle layer had a high thickness and was dense.

### Example 4

Solution A, solution B, and solution C were prepared in the same manner as in Example 2. A 500 L titanium reaction kettle having a controllable temperature and a controllable rotating speed was used, 250 L of hot pure water was firstly added, the temperature of the reaction kettle was controlled to be 60°C, the stirring speed was controlled to be 420 rpm, then the solution A and the solution B were pumped into the reaction kettle, the ammonia value was maintained at 4.5 g/L before adding an alkali, and the initial pH value was 12.10, so as to prepare a reaction kettle starting base solution. After the start of the reaction, the flow rates of the solution A, solution B, and solution C were respectively set to 8 L/h, 2.5 L/h, and 15 L/h, and the mixture was continuously pumped to a constant-temperature reaction kettle at 60°C through a material feeding tank for a reaction. At a stirring speed of 360 rpm, the flow rate of the solution A was adjusted so that the pH value of the synthesis system was stable at 12.10, the flow rate of the solution B was adjusted so that the ammonia value of the synthesis system was maintained at 5.5 g/L, the flow rate of nitrogen gas under the liquid of the atmosphere of the reaction kettle was adjusted to 400 L/h, and the maintaining time was 90 min, so as to complete the first reaction stage.

At a stirring speed of 420 rpm, the flow rate of the solution A was reduced, the pH value was slowly adjusted to 11.70 and then the flow rate was recovered, and at the same time, the flow rate of the solution B was synchronously adjusted so as to maintain the ammonia value of the synthesis system at 4.5 g/L, and the nitrogen gas flow rate under the liquid of the atmosphere of the reaction kettle was adjusted to be 400 L/h for a duration of 30 h, wherein the flow rate of the solution C was adjusted after completing the first reaction stage for 15 h, and was quickly increased to 25 L/h within 12 h, the flow rates of the solution A and solution B were synchronously adjusted to stabilize the pH value at 11.70, and the ammonia value was maintained at 4.5 g/L; the stirring speed was reduced gradiently according to D₅₀, when D₅₀ reached 2.50 µm, the stirring speed was reduced and maintained at 390 rpm, when D₅₀ reached 3.50 µm, the stirring speed was reduced and maintained at 360 rpm, and when D₅₀ reached 3.85 µm, the reaction was stopped, so as to obtain a nickel-cobalt-manganese ternary precursor slurry.

The precursor slurry satisfying particle diameter requirements was placed in a transfer tank and stirred, and washed with an alkali solution and pure water, alternately, and then the material was uniformly distributed in a drying device for drying, wherein the drying temperature was 90°C and the drying time was 8 h; and then a nickel-cobalt-manganese ternary precursor product was obtained by sieving, removing iron, and packaging, wherein the screen was a 325-mesh double layer screen. The morphology of the prepared nickel-cobalt-manganese ternary precursor was observed. As shown in Fig. 2, it can be determined that the precursor particles were uniform and had good dispersibility, the core particle diameter was relatively small, and the primary particle layer had a relatively high thickness and was dense.

### Example 5

Solution A, solution B, and solution C were prepared in the same manner as in Example 2. A 500 L titanium reaction kettle having a controllable temperature and a controllable rotating speed was used, 250 L of hot pure water was firstly added, the temperature of the reaction kettle was controlled to be 70°C, the stirring speed was controlled to be 450 rpm, then the solution A and the solution B were pumped into the reaction kettle, the ammonia value was maintained at 4.0 g/L before adding an alkali, and the initial pH value was 12.00, so as to prepare a reaction kettle starting base solution. After the start of the reaction, the flow rates of the solution A, solution B, and solution C were respectively set to 8 L/h, 2.5 L/h, and 15 L/h, and the mixture was continuously pumped to a constant-temperature reaction kettle at 70°C through a material feeding tank for a reaction. At a stirring speed of 360 rpm, the flow rate of the solution A was adjusted so that the pH value of the synthesis system was stable at 12.00, the flow rate of the solution B was adjusted so that the ammonia value of the synthesis system was maintained at 4.0 g/L, the flow rate of nitrogen gas under the liquid of the atmosphere of the reaction kettle was adjusted to 400 L/h, and the maintaining time was 90 min, so as to complete the first reaction stage.

At a stirring speed of 450 rpm, the flow rate of the solution A was reduced, the pH value was slowly adjusted to 11.70 and then the flow rate was recovered, and at the same time, the flow rate of the solution B was synchronously adjusted so as to maintain the ammonia value of the synthesis system at 4.0 g/L, and the nitrogen gas flow rate under the liquid of the atmosphere of the reaction kettle was adjusted to be 400 L/h for a duration of 35 h, wherein the flow rate of the solution C was adjusted after completing the first reaction stage for 15 h, and was quickly increased to 30 L/h within 12 h, the flow rates of the solution A and solution B were synchronously adjusted to stabilize the pH value at 11.70, and the ammonia value was maintained at 4.0 g/L; the stirring speed was reduced gradiently according to D₅₀, when D₅₀ reached 2.50 µm, the stirring speed was reduced and maintained at 420 rpm, when D₅₀ reached 3.50 µm, the stirring speed was reduced and maintained at 390 rpm, and when D₅₀ reached 3.75 µm, the reaction was stopped, so as to obtain a nickel-cobalt-manganese ternary precursor slurry.

The precursor slurry satisfying particle diameter requirements was placed in a transfer tank and stirred, and washed with an alkali solution and pure water, alternately, and then the material was uniformly distributed in a drying device for drying, wherein the drying temperature was 90°C and the drying time was 8 h; and then a nickel-cobalt-manganese ternary precursor product was obtained by sieving, removing iron, and packaging, wherein the screen was a 325-mesh double layer screen. The morphology of the prepared nickel-cobalt-manganese ternary precursor was observed. As shown in Fig. 2, it can be determined that the precursor particles were uniform and had good dispersibility, the core particle diameter was relatively small, and the primary particle layer had a relatively high thickness and was dense.

### Comparative Example 1

The difference between Comparative Example 1 and Example 2 was that the stirring speed of the first reaction stage to the third reaction stage was constant at 300 rpm.

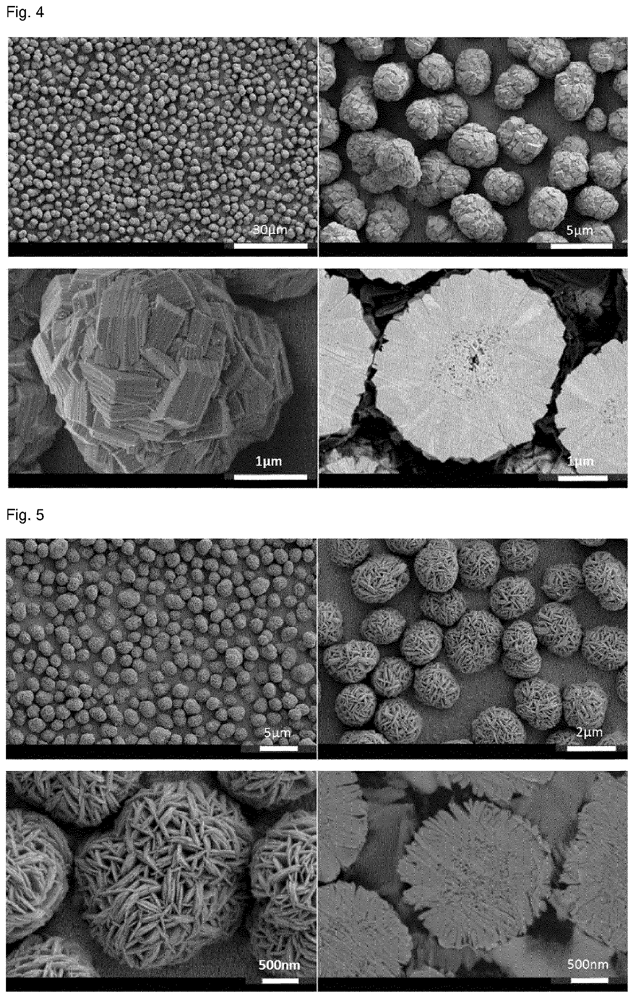

The morphology of the prepared nickel-cobalt-manganese ternary precursor was observed. As shown in Fig. 4, it can be determined that the precursor particles partially aggregated, the porosity of the core reached 8%, and holes exist, resulting in a relatively high BET.

### Comparative Example 2

Comparative Example 2 differs from Example 2 in that the pH value of the second reaction stage was reduced to 11.0 for a duration of 2 h.

The morphology of the prepared nickel-cobalt-manganese ternary precursor was observed. As shown in Fig. 5, it can be determined that the surface of the precursor particles was in the form of stacked thin pieces, and both the surface and the interior of the particles have abundant pores, resulting in a large specific surface area of particles.

### Comparative Example 3

Step 1, according to a required molar ratio, i.e. 9:0.5:0.5, of nickel, cobalt and manganese elements in a nickel-cobalt-manganese hydroxide, a mixed metal salt solution of 1.2 mol/L was prepared by using nickel, cobalt, and manganese soluble salts as raw materials and adding pure water, a sodium hydroxide solution of 1.0 mol/L was prepared, and ammonia water of 1.0 mol/L was prepared as a complexing agent.

Step 2, the jacket of a reaction kettle was opened to feed water and return water, and nitrogen gas was fed into the reaction kettle.

Step 3, pure water was added into the reaction kettle until it covered a bottom stirring paddle, then the sodium hydroxide solution and the ammonia water prepared in step 1 were added so as to form a reaction starting base solution, and a nitrogen introduction state was kept during the synthesis process; the base solution had a pH value of 11.2 (45°C) and an ammonia value of 1.0 g/L.

Step 4, the mixed metal salt solution, sodium hydroxide solution, and ammonia water prepared in step 1 were added into a reaction kettle in parallel under constant stirring for reaction. The amount of the mixed metal salt solution added per hour was 0.001 of the total volume of the reaction kettle, the stirring power per unit volume was controlled to be 10 W/L, the reaction temperature was controlled to be 50.0°C, the pH value was controlled to be 11.2 (45°C), and the ammonia value was controlled to be 1.0 g/L.

Step 5, when the amount of seed crystal in the reaction kettle reached the target demand, the pH of the reaction was reduced to 10.8 (45°C), and continuously, the reaction temperature was controlled to 50.0°C and the ammonia value was controlled to be 1.0 g/L, the flow rate of the mixed metal salt solution was gradually increased in a linear manner within 1 h until the addition amount per hour is 0.01 of the total volume of the reaction kettle, and then the flow rate of the mixed metal salt solution was maintained stable.

Step 6, when the liquid level reached a clearing requirement, a concentrator was started for clearing, the liquid level in the reaction kettle was kept stable, the solid content in the reaction kettle gradually increased, and air or oxygen was continuously introduced, with the ratio of the introduction amount to nitrogen gas being 0.01:1.

Step 7, after the solid content in the reaction kettle reached 50 g/L, a linear manner was used to start to gradually reduce the temperature to 40.0°C, the pH to 10.4 (45°C), and the stirring power per unit volume to 0.2 W/L, then the parameters were kept stable, and the ammonia value was continued to be controlled to 1.0 g/L.

Step 8, when it was detected that the particle diameter of the material in the reaction kettle reached a required value, feeding to the reaction kettle was stopped, and stirring and ageing were continued for 1-2 hours.

Step 9, solid-liquid separation was performed on the aged material in step 8, and the separated filter cake was washed with a potassium hydroxide or sodium hydroxide solution and then rinsed with pure water to obtain a washed filter cake.

Step 10, the filter cake washed in step 9 was dried by means of a drying device, and then successively subjected to sieving and demagnetizing, so as to obtain a large-particle nickel-cobalt-manganese hydroxide.

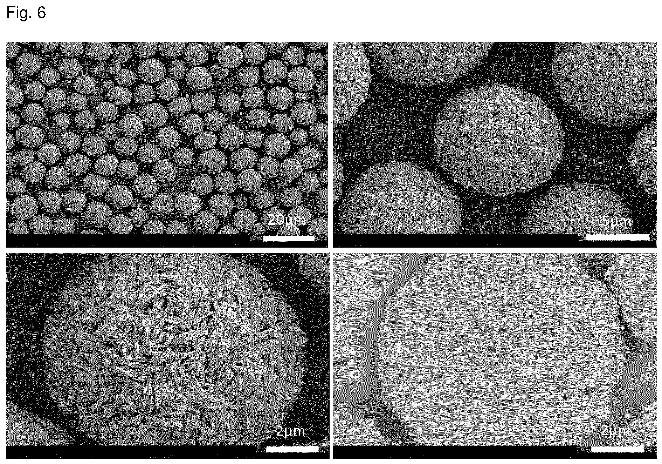

The large-particle nickel-cobalt-manganese hydroxide prepared in this Comparative Example was determined to be spherical-like particles by scanning electron microscopy, and the D₅₀ was determined to be 9.80 µm by means of a laser particle diameter analysis diffraction method. As shown in Fig. 6, the interior of the particles appeared to grow radially, and a cross section taken by cutting off the particle with an argon ion beam showed that the particle presented an internal structure of loose porous voids. The primary particles were in the shape of "thin strips" having a clear texture, and had a width of 30 nm-250 nm.

Examples 1-5 and Comparative Examples 1-3 were tested and the results were shown in Tables 1 and 2.

**Table 1**

| | Main element content (mol%) | | | Sodium and sulfur content (ppm) | |
|---|---|---|---|---|---|
| | Ni | Co | Mn | Na | S |
| Example 1 | 88.03 | 5.99 | 5.98 | 134 | 832 |
| Example 2 | 88.94 | 4.01 | 7.06 | 129 | 845 |
| Example 3 | 88.96 | 4.00 | 7.04 | 141 | 878 |
| Example 4 | 87.99 | 5.00 | 7.01 | 128 | 981 |
| Example 5 | 88.03 | 4.99 | 6.98 | 110 | 962 |
| Comparative Example 1 | 88.91 | 4.01 | 7.08 | 138 | 860 |
| Comparative Example 2 | 89.03 | 4.01 | 6.96 | 161 | 1731 |
| Comparative Example 3 | 90.01 | 5.02 | 4.97 | 298 | 2423 |

**Table 2**

| | BET (m²/g) | D₅₀ (µm) | K₉₀ | Thickness of primary particles (nm) | Ratio of core radius to thickness of coating layer | Porosity (%) | |
|---|---|---|---|---|---|---|---|
| | | | | | | Core | Coating layer |
| Example 1 | 4.97 | 3.60 | 0.55 | 300-500 | 1:3.50 | 2 | 1 |
| Example 2 | 4.36 | 3.90 | 0.53 | 320-470 | 1:2.90 | 4 | 1 |
| Example 3 | 3.80 | 3.90 | 0.52 | 340-490 | 1:3.60 | 3 | 1 |
| Example 4 | 4.12 | 3.85 | 0.52 | 320-500 | 1:3.10 | 2 | 1 |
| Example 5 | 3.05 | 3.75 | 0.54 | 300-460 | 1:2.75 | 3 | 1 |
| Comparative Example 1 | 8.74 | 3.90 | 0.61 | 320-530 | 1:1.80 | 8 | 2 |
| Comparative Example 2 | 12.75 | 3.90 | 0.57 | 60-200 | 1:1.00 | 6 | 9 |
| Comparative Example 3 | 5.87 | 9.80 | 0.41 | 30-240 | 1:2.00 | 3 | 4 |

Various technical features of the described examples can be combined in any way, and in order to make the description brief, not all possible combinations of the technical features in the described examples are described. However, as long as the combinations of these technical features are not contradictory, all of the technical features should be considered to fall within the scope of the description.

The described examples merely represent several embodiments of the present application, and the description thereof is relatively specific and detailed, but cannot be understood as a limitation to the patent scope of the invention. It should be noted that, for those skilled in the art, various modifications and improvements can be made without departing from the concept of the present application, and all these modifications and improvements belong to the scope of protection of the present application. Therefore, the scope of protection of the present application shall be based on the attached claims.

## Claims

1. A nickel-cobalt-manganese ternary precursor, comprising a core and a coating layer formed by stacking a plurality of primary particles on the surface of the core, wherein the porosity of the core is greater than the porosity of the coating layer, the particle diameter of the core is less than or equal to 1 µm, and the ratio of the radius of the core to the thickness of the coating layer is less than or equal to 1:2.75.

2. The nickel-cobalt-manganese ternary precursor according to claim 1, wherein the nickel-cobalt-manganese ternary precursor satisfies at least one of the following conditions:
(1) the volume of the core accounts for 0.5%-4.0% of the volume of the nickel-cobalt-manganese ternary precursor;
(2) the particle diameter of the nickel-cobalt-manganese ternary precursor is less than or equal to 8 µm;
(3) the porosity of the coating layer is less than or equal to 1.5%;
(4) the porosity of the core is 1%-5%; and
(5) the nickel-cobalt-manganese ternary precursor has a K₉₀ of 0.50-0.55.

3. The nickel-cobalt-manganese ternary precursor according to claim 2, wherein the nickel-cobalt-manganese ternary precursor has a particle diameter of 3 µm-8 µm.

4. The nickel-cobalt-manganese ternary precursor according to any one of claims 1-3, wherein the primary particles are obtained by stacking a plurality of sheet-like structures, and the primary particles have a thickness of 300 nm-500 nm in the stacking direction of the sheet-like structures.

5. The nickel-cobalt-manganese ternary precursor according to any one of claims 1-3, wherein the nickel-cobalt-manganese ternary precursor has a general molecular formula of NiₓCo_{y}Mn_{z}(OH)₂, wherein x+y+z=1, 0.8≤x≤0.9, 0<y≤0.2, and 0<z≤0.2.

6. A preparation method for the nickel-cobalt-manganese ternary precursor according to any one of claims 1-5, comprising the following steps:
mixing a soluble nickel salt, a soluble cobalt salt, and a soluble manganese salt to obtain a mixed metal salt solution, and mixing a first ammonia water, a first alkali solution, and water to obtain a base solution;
continuously adding the mixed metal salt solution, a second ammonia water, and a second alkali solution to the base solution for a coprecipitation reaction, and when the D₅₀ particle diameter of the product reaches a target size, completing the reaction, so as to obtain a nickel-cobalt-manganese ternary precursor;
wherein the coprecipitation reaction comprises a first reaction stage, a second reaction stage, and a third reaction stage, and satisfies the following conditions:
(1) the pH value of the second reaction stage is less than the pH value of the first reaction stage, and the pH value of the third reaction stage is less than the pH value of the first reaction stage; and
(2) the stirring speed is decreased gradiently with the increase of the particle diameter of the product from the third reaction stage.

7. The preparation method for the nickel-cobalt-manganese ternary precursor according to claim 6, wherein the coprecipitation reaction satisfies at least one of the following conditions:
(1) the pH value of the third reaction stage is less than or equal to the pH value of the second reaction stage;
(2) the stirring speed of the first reaction stage is greater than or equal to the stirring speed of the second reaction stage;
(3) the flow rate of the mixed metal salt solution is increased from the second reaction stage, and the flow rate of the mixed metal salt solution in the first reaction stage is less than the flow rate of the mixed metal salt solution in the third reaction stage;
(4) the ammonia value in the first reaction stage is greater than or equal to the ammonia value in the second reaction stage, and the ammonia value in the second reaction stage is greater than or equal to the ammonia value in the third reaction stage; and
(5) the first reaction stage, the second reaction stage, and the third reaction stage are all performed under alkaline conditions.

8. The preparation method for the nickel-cobalt-manganese ternary precursor according to claim 7, wherein the coprecipitation reaction satisfies at least one of the following conditions:
(1) the difference value between the pH value of the first reaction stage and the pH value of the second reaction stage is 0.3-0.5, and the pH value of the third reaction stage is equal to the pH value of the second reaction stage;
(2) in the third reaction stage, the stirring speed is reduced by 20 rpm-30 rpm for every 0.5 µm-1 µm increase in the particle diameter of the product, and the stirring speed in the first reaction stage is equal to the stirring speed in the second reaction stage;
(3) the difference value between the flow rate of the mixed metal salt solution in the second reaction stage and the flow rate of the mixed metal salt solution in the first reaction stage is less than or equal to 15 L/h, the increase rate is less than or equal to 1.3 L/h, and the flow rate of the mixed metal salt solution in the third reaction stage is equal to the flow rate of the mixed metal salt solution at the end of the second reaction stage; and
(4) the ammonia value of the second reaction stage is equal to the ammonia value of the third reaction stage.

9. The preparation method for the nickel-cobalt-manganese ternary precursor according to claim 8, wherein the coprecipitation reaction also satisfies at least one of the following conditions:
(1) in the first reaction stage, the pH value is 11.3-12.6, the ammonia value is 2.0 g/L-10.0 g/L, the stirring speed is 330 rpm-600 rpm, and the flow rate of the mixed metal salt solution is 2 L/h-30 L/h;
(2) in the second reaction stage, the pH value is 11.1-12.2, the ammonia value is 2.0 g/L-10.0 g/L, the stirring speed is 330 rpm-600 rpm, and the flow rate of the mixed metal salt solution is 2 L/h-40 L/h; and
(3) in the third reaction stage, the pH value is 11.1-12.2, the ammonia value is 2.0 g/L-10.0 g/L, the stirring speed is 100 rpm-550 rpm, and the flow rate of the mixed metal salt solution is 15 L/h-40 L/h.

10. The preparation method for the nickel-cobalt-manganese ternary precursor according to claim 6, wherein the time of the first reaction stage accounts for 0.5%-1.5% of the total time of the coprecipitation reaction, and the time of the second reaction stage accounts for 16%-25% of the total time of the coprecipitation reaction.

11. The preparation method for the nickel-cobalt-manganese ternary precursor according to any one of claims 6-10, wherein the coprecipitation reaction also satisfies at least one of the following conditions:
(1) the flow rate of nitrogen gas introduced into the liquid in the reaction solution is 100 L/h-800 L/h;
(2) the flow rate of air introduced into the liquid in the reaction solution is less than or equal to 300 L/h;
(3) the reaction temperature is 40 °C-75 °C;
(4) the concentration of the second ammonia water is 1.0 mol/L-12.0 mol/L;
(5) the concentration of the second alkali solution is 1.0 mol/L-13.0 mol/L; and
(6) the second alkali solution is a sodium hydroxide solution.

12. The preparation method for the nickel-cobalt-manganese ternary precursor according to any one of claims 6-10, wherein the mixed metal salt solution satisfies at least one of the following conditions:
(1) the total concentration of mixed metal salts in the mixed metal salt solution is 1.2 mol/L-2.7 mol/L; and
(2) based on the total molar percentage of metal ions in the mixed metal salt solution being defined as 100%, in the mixed metal salt solution, the molar percentage of nickel ions is 80%-90%, the molar percentage of cobalt ions is less than or equal to 20%, and the molar percentage of manganese ions is less than or equal to 20%.

13. The preparation method for the nickel-cobalt-manganese ternary precursor according to any one of claims 6-10, wherein the base solution satisfies at least one of the following conditions:
(1) the ammonia value is 2 g/L-10 g/L;
(2) the pH value is 11.3-12.6;
(3) the amount of water used is 100 L-300 L;
(4) the concentration of the first ammonia water is 1.0 mol/L-12.0 mol/L;
(5) the concentration of the first base solution is 1.0 mol/L-13.0 mol/L; and
(6) the first alkali solution is a sodium hydroxide solution.

14. A cathode material made from the nickel-cobalt-manganese ternary precursor of any one of claims 1-5.

15. A lithium-ion battery, comprising the cathode material according to claim 14.
